Europäisches Patentamt

European Patent Office

Office européen des brevets

(19)

(11) Veröffentlichungsnummer: **0 234 505**
**B1**

(12)

# EUROPÄISCHE PATENTSCHRIFT

(45) Veröffentlichungstag der Patentschrift:
03.01.90

(21) Anmeldenummer: 87102370.1

(22) Anmeldetag: 19.02.87

(51) Int. Cl.⁵: **B 05 D 1/00**, B 05 D 3/00,
B 05 D 7/02, B 05 C 9/10,
B 05 C 13/02

(54) Verfahren und Vorrichtung zum Aufbringen von Klebemittel auf biegeweiche strangförmige Teile.

(30) Priorität : 28.02.86 DE 3606495

(43) Veröffentlichungstag der Anmeldung :
02.09.87 Patentblatt 87/36

(45) Bekanntmachung des Hinweises auf die Patenterteilung : 03.01.90 Patentblatt 90/01

(84) Benannte Vertragsstaaten :
ES FR GB IT SE

(56) Entgegenhaltungen :
DE—A— 2 936 396
DE—A— 3 246 577
US—A— 3 900 362

(73) Patentinhaber : Bayerische Motoren Werke Aktiengesellschaft
Patentabteilung AJ-3 Postfach 40 02 40 Petuelring
130
D-8000 München 40 (DE)

(72) Erfinder : Leistner, Rolf
Rambertweg 13
D-8000 München50 (DE)
Erfinder : Bothe, Ulrich
Lessingstrasse 38 a
D-8070 Reichertshofen (DE)

(74) Vertreter : Bücken, Helmut
Bayerische Motoren Werke Aktiengesellschaft Postfach 40 02 40 Petuelring 130 - AJ-30
D-8000 München 40 (DE)

EP 0 234 505 B1

**Beschreibung**

Die Erfindung bezieht sich auf ein Verfahren der im Oberbegriff des ersten Anspruchs angegebenen Art sowie auf eine Vorrichtung zur Durchführung des Verfahrens nach dem Oberbegriff des Anspruchs 3.

Es ist allgemein bekannt, daß Profilkörper, insbesondere Dichtungsprofilkörper für Kraftfahrzeugsöffnungen in einer entsprechenden Leiste, die mit der Karosserieöffnung im Zusammenhang steht, gehalten wird. Diese Leiste muß während der Fertigung extra angebracht werden. Dies geschieht üblicherweise durch Schweißen. Die Gefahr besteht hierbei, daß diese Leiste im Laufe der Einsatzzeit unterrostet wird und damit sich eventuell lockert, zumindest aber unansehnlich wird. Darüberhinaus ist diese Leiste Ausgangspunkt für weiteren Rostfraß an den benachbarten Karosserieteilen.

Aus der DE-OS 32 46 577, auf welcher die Oberbegriffe der Ansprüche 1 und 3 basieren, ist es bereits bekannt, als Dichtungen ausgebildete Profilkörper an die entsprechenden Teile der Karosserie anzukleben. Hierzu ist der Profilkörper im Bereich der Anbringung des Klebebandes oder des Klebemittels mit einer Metalleinlage verstärkt. Diese hat die Aufgabe, den Auftrag des Klebemittels bzw. des Klebstoffs und eventuell auch das Aufkleben des Profilkörpers zu erleichtern.

Nachteilig ist es hierbei, daß durch die Metalleinlage der Profilkörper starr und damit unhandlich beim Handling wird. Darüberhinaus bedeutet das Einbringen der Metalleinlage in den Profilkörper einen erhöhten Kosten- und Arbeitsaufwand. Ein weiterer Nachteil ist noch darin zu sehen, daß bei einem Verbiegen der Metalleinlage Probleme beim Ankleben des Profilkörpers an dem entsprechenden Karosserieteil auftreten.

Aufgabe der vorliegenden Erfindung ist es, ein Verfahren und eine Vorrichtung zur Durchführung des Verfahrens bereitzustellen, mit dem unverstärkte, d. h. biegeweiche strangförmige Profilkörper sicher beschichtet werden können.

Zur Lösung dieser Aufgabe wird das in den Merkmalen des kennzeichnenden Teils des Anspruchs 1 beschriebene Verfahren vorgeschlagen. Dieses Verfahren basiert auf dem Gedanken, daß die zu beschichtende Profilkörperseite nur entsprechend unter Spannung gesetzt werden muß, also gestreckt werden muß, um dann eine zum Auftragen des Klebstoffs relativ formsteife Fläche zu bilden. Dabei geht das erfindungsgemäße Verfahren von dem Gedanken aus, daß eine sichere Streckung des Profilkörpers nur dann erzielt wird, wenn die zu beschichtende Profilkörperseite gestreckt wird. Der dann so gestreckte Profilkörper wird dann unter Freigabe der zu beschichtenden Seite an eine Aufnahmeeinrichtung übergeben. Damit kann die freigewordene Seite beschichtet werden.

Vorteilhaft ist eine Streckung des Profilkörpers zum Beschichten auf Werte, die angenähert denen entsprechen, wie sie in eingebautem Zustand erreicht werden. Dadurch wird sicher jede Relativbewegung und damit Verwerfung zwischen dem Klebestoff und dem Profilkörper in eingebautem Zustand vermieden.

Die kennzeichnenden Merkmale des Anspruchs 3 beschreiben eine zur Durchführung des Verfahrens nach Anspruch 1 geeignete Vorrichtung. Diese Vorrichtung eignet sich besonders zum Beschichten von nicht formkonstanten Profilkörpern mittels Klebebandes oder Klebstoffs.

Die Ausbildung nach Anspruch 4 beschreibt eine hierzu geeignete Spannvorrichtung.

Durch die Weiterbildung nach Anspruch 5 wird erreicht, daß die Spannvorrichtung universeller einsetzbar wird und auch auf ihr Profilkörper unterschiedlicher Länge sicher gespannt werden können. Darüberhinaus kann dadurch die Höhe der Spannung problemlos einreguliert werden.

Die Ausbildung nach Anspruch 6 beschreibt eine zur Durchführung des Verfahrens geeignete Aufnahmevorrichtung. Sie hat den Vorteil, daß die Spannvorrichtung gegen die ortsfeste Backe der Aufnahmevorrichtung fahren kann und daß dann die bewegliche Backe der Aufnahmevorrichtung den Profilkörper sicher einklemmen kann. Vorteilhaft ist es hierbei, wenn die Spannflächen der Backen der Außenkontur des Profilkörpers an seinen nicht zu beschichtenden Seiten angepaßt sind (Anspruch 7). Durch die Weiterbildung der Aufnahmevorrichtung nach den kennzeichnenden Merkmalen der Ansprüche 8 und 9 wird das Auftragen des Klebstoffs bzw. Klebebandes wesentlich erleichtert.

Um je nach Profilkörperkontur zu vermeiden, daß beim Entfernen der Spannvorrichtung der Profilkörper zwischen den Backen verrückt, ist die Weiterbildung nach Anspruch 10 sinnvoll. Die konkrete Lage der Saugöffnung ist hierbei abhängig von der Profilausbildung.

Die Weiterbildung nach Anspruch 11, 12 beschreibt eine vorteilhaft aufgebaute Klebstoffauftragsvorrichtung, die sich insbesondere zum Zusammenwirken mit der vorher beschriebenen Aufnahmeeinrichtung eignet.

Im folgenden wird die Erfindung anhand eines ausgewählten Beispieles schematisch beschrieben.

Es stellen dar:

Fig. 1 einen schematisierten Querschnitt durch die Spann- und Aufnahmeeinrichtung;

Fig. 2 die Übergabe des Profilkörpers von der Spannvorrichtung an die Aufnahmeeinrichtung;

Fig. 3 eine schematisierte Seitenansicht von Aufnahmeeinrichtung und Klebemittelauftragsvorrichtung;

Fig. 4 einen schematisierten Querschnitt durch Anordnung nach Figur 3.

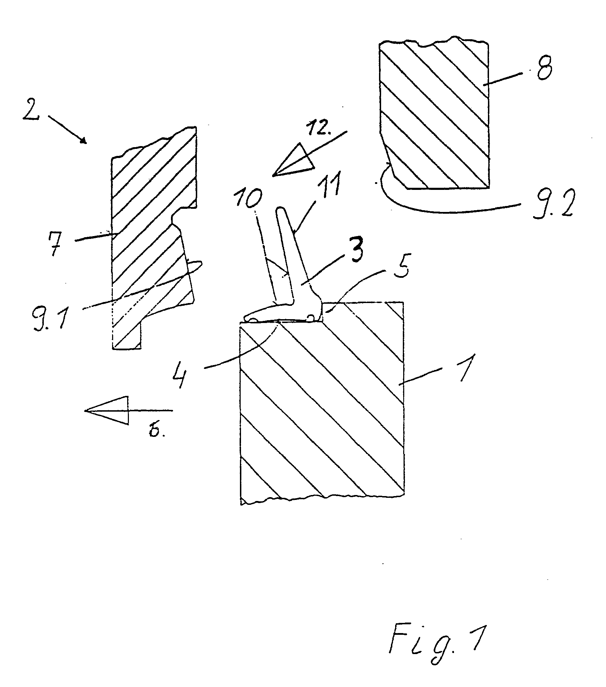

In Figur 1 sind schematisch die einzelnen Elemente der Spannvorrichtung 1 sowie der Aufnahmevorrichtung 2 dargestellt. Auf der Spannvorrichtung 1 ist der zu beschichtende Profilkörper 3 aufgespannt. Die Spannvorrichtung 1 ist hierbei so ausgebildet, daß der Profilkörper 3 mit seiner zu beschichtenden Seite 4 auf der Spannvorrichtung 1 aufliegt. Hierzu weist die Spannvorrichtung 1 radial nach außen bzw. innen verfahrbare Segmente auf, auf die der Profilkörper 3 aufgelegt wird. Sobald er aufgelegt ist, fahren die Segmente nach außen und spannen den Profilkörper 3. Zum besseren Halten des Profilkörpers 3 und zum Erreichen einer definierten Aufspannlage weist die Spannvorrichtung 1 eine Schulter 5 auf, die die Aufschiebebewegung des Profilkörpers 3 in Querrichtung begrenzt.

Die Bewegung der Segmente 1 wird dann gestoppt, wenn die zu beschichtende Seite 4 des Profilkörpers 3 verwerfungsfrei gespannt ist. Dies wird immer dann erreicht sein, wenn der Profilkörper 3 auf eine derartige Länge gedehnt ist, die der Einbaulänge entspricht.

Sobald diese Spannung im Profilkörper 3 erreicht ist, fährt die Spanneinrichtung 1 in Richtung des Pfeiles 6, um den Profilkörper 3 an die Aufnahmeeinrichtung 2 zu übergeben.

Die Aufnahmeeinrichtung 2 besteht aus der ortsfesten Backe 7 und der verfahrbar angeordneten Backe 8. Die Spannflächen 9.1 und 9.2 der Spannbacken 7 und 8 sind derart ausgebildet, daß sie im wesentlichen der Außenkontur des Profilkörpers an seinen nicht zu beschichtenden Seiten entsprechen. Die äußere Form der Backen 7 und 8 ist hierbei so gewählt, daß sie die Spannvorrichtung 1 im Bereich des Profilkörpers 3 umschließen. Im konkreten Beispiel bedeutet dies bei ringförmig ausgebildeter Spannvorrichtung 1, daß die Backen 7 und 8 ebenfalls ringförmig ausgebildet sind.

Durch die Bewegung der Spanneinrichtung 1 in Richtung des Pfeiles 6 gelangt der Profilkörper 3 mit der ortsfest angeordneten Backe 7 in Kontakt. Hierbei legen sich die Profilkörperseiten 10 an die Aufnahmefläche 9.1 der Backe 7 an. Sodann wird die verfahrbar angeordnete Backe 8 in Richtung auf die Backe 7 zubewegt (Pfeil 12). Damit gelangt die Aufnahmefläche 9.2 mit der Profilkörperseite 11 in Kontakt.

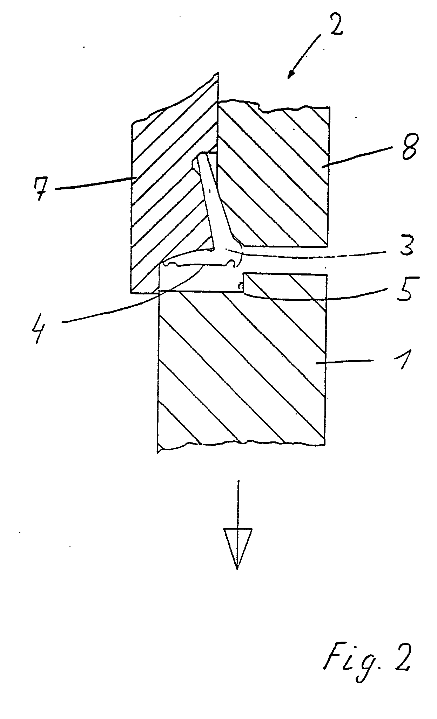

In der Abbildung nach Figur 2 ist der Zustand gezeigt, der erreicht wird, wenn die Backen 7 und 8 vollständig zusammengefahren sind. Dadurch ist der Profilkörper 3 an seinen freien Profilkörperseiten 10 und 11 vollständig von den Aufnahmeflächen umschlossen. Sodann wird die Spannvorrichtung 1 bzw. deren Segmente radial nach innen bewegt. Dadurch wird die zu beschichtende Profilkörperseite 4 freigegeben.

Um bei diesem Verfahrensschritt zu verhindern, daß — je nach Ausbildung des Profilkörpers — dieser sich in den beiden Backen 7 und 8 bewegt, kann zusätzlich — vorteilhafterweise in der ortsfesten Backe 7 — eine Unterdruckleitung vorgesehen werden. Deren Öffnung mündet an einem geeigneten Bereich auf der Profilkörperseite 10. Dadurch wird zusätzlich eine erhöhte Klemmwirkung auf den Profilkörper 3 ausgeübt.

Sobald sich die Spannvorrichtung 1 zusammengezogen hat und dann wieder entgegengesetzt zur Richtung des Pfeiles 6 zurückbewegt wurde, kann der Beschichtungsvorgang beginnen.

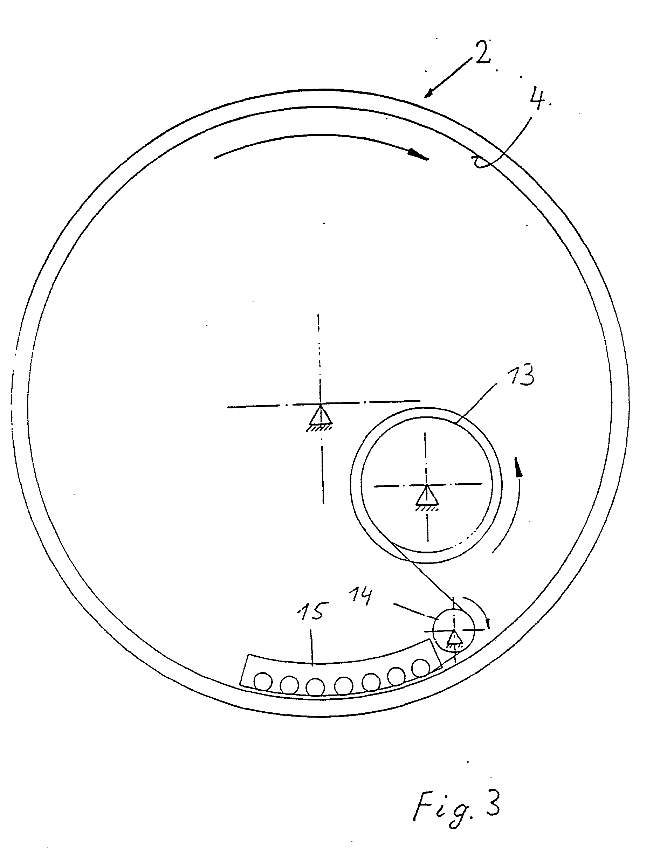

In Figur 3 ist dies schematisch dargestellt für den Fall, daß der Profilkörper 3 mit einem Klebeband beschichtet werden soll. Die hierzu notwendige Klebebandrolle 13 ist innerhalb der von der Aufnahmeeinrichtung 2 umschlossenen Fläche angeordnet. Dadurch wird sichergestellt, daß das Klebeband mit der Profilkörperseite 4 fluchtend aufgebracht werden kann. Zum Aufbringen sind Umlenkrollen 14 und Anpreßrollen 15 vorgesehen.

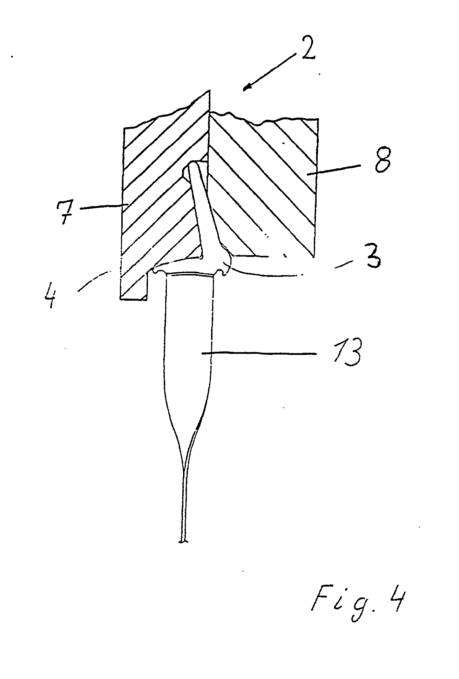

In Figur 4 ist ein Querschnitt durch den beschichteten, noch in der Aufnahmeeinrichtung 2 festgehaltenen Profilkörper 3 dargestellt.

## Patentansprüche

1. Verfahren zum Aufbringen von Klebemittel auf biegeweiche, strangförmige Profilkörper (3), insbesondere endlose Dichtungsprofilkörper für Karosserieöffnungen an Kraftfahrzeugen, dadurch gekennzeichnet, daß die zu beschichtende Profilkörperseite (4) gestreckt wird, daß anschließend der so gestreckte Profilkörper (3) ohne Spannungsverlust an eine den Profilkörper (3) auf seiner nicht zu beschichtenden Seite (10, 11) haltenden Einrichtung (7, 8) übergeben wird und daß dann die so freigelegte zu beschichtende Profilkörperseite (4) mit Klebemittel (13) beschichtet wird und danach die Spannung des Profilkörpers (3), zurückgenommen wird.

2. Verfahren nach Anspruch 1, dadurch gekennzeichnet, daß die Spannung im Profilkörper (3) durch Streckung annähernd gleich der Spannung in dem fertig montierten Profilkörper entspricht.

3. Vorrichtung zum Aufbringen von Klebemittel (13) auf biegeweiche, strangförmige Teile (3), insbesondere auf Dichtungen für Karosserieöffnungen in Kraftfahrzeugen, bestehend aus einem Profilkörper (3) mit gleichen oder ungleichen Profilen, von denen eines mit einem Klebestoff oder Klebeband (13) versehen ist, dadurch gekennzeichnet, daß eine beweglich angeordnete Spannvorrichtung (1) vorgesehen ist, auf die der Profilkörper (3) mit der zu beschichtenden Profilseite (4) unter Spannung aufgelegt ist, daß eine Aufnahmeeinrichtung (2) vorgesehen ist, die den gespannten Profilkörper (3) an den nicht zu beschichtenden Profilseiten (10, 11) festhält und daß eine Klebemittel- oder Klebestoffauftragsvorrichtung vorgesehen ist, die mit der zu beschichtenden Profilkörperseite (4) zusammenwirkt.

4. Vorrichtung nach Anspruch 3, dadurch gekennzeichnet, daß die Spannvorrichtung (1) eine Spannfläche aufweist, deren Länge angenähert der Befestigungslänge des den Profilkörper (3) tragenden Bauteils aufweist.

5. Vorrichtung nach Anspruch 3 oder 4, dadurch gekennzeichnet, daß die Spannvorrichtung (1) aus einzelnen radial verfahrbaren Segmenten besteht, die gegeneinander höhenverstellbar angeordnet sind.

6. Vorrichtung nach einem der vorangegangenen Ansprüche, dadurch gekennzeichnet, daß die Aufnahmeeinrichtung (2) aus zwei Backen (7, 8) besteht, von denen mindestens eine verfahrbar angeordnet ist.

7. Vorrichtung nach Anspruch 6, dadurch gekennzeichnet, daß die Backen (7, 8) in geschlossenem Zustand eine Fläche begrenzen, die der Negativform des Profilkörpers (1) an den nicht zu beschichtenden Profilkörperseiten (10, 11) entspricht.

8. Vorrichtung nach Anspruch 6 oder 7, dadurch gekennzeichnet, daß die Aufnahmeeinrichtung (2) ringförmig ausgebildet ist.

9. Vorrichtung nach einem der vorangegangenen Ansprüche, dadurch gekennzeichnet, daß die Aufnahmeeinrichtung (2) drehbar gelagert ist.

10. Vorrichtung nach einem der vorangegangenen Ansprüche, dadurch gekennzeichnet, daß an der Aufnahmeeinrichtung (2) eine Unterdruckquelle anschließbar ist, deren Saugöffnung in der Aufnahmefläche für den Profilkörper (1) mündet.

11. Vorrichtung nach einem der vorangegangenen Ansprüche, wobei als Klebemittel ein zweiseitig beschichtetes Klebeband vorgesehen ist, dadurch gekennzeichnet, daß das Klebeband auf einer innerhalb des durch die ringförmig ausgebildete Aufnahmevorrichtung (2) beschriebenen Raumes liegende Vorratsrolle (13) angeordnet ist.

12. Vorrichtung nach Anspruch 11, dadurch gekennzeichnet, daß das Klebeband von der Vorratsrolle (13) über Umlenkrollen (14) und Andrückrollen (15) auf die zu beschichtende Profilkörperseite (4) zugeführt wird.

## Claims

1. A method of applying adhesive to flexible sectional members (3) in the form of continuous strips, more particularly endless sectional sealing members for openings in motor vehicle bodies, characterised in that the side (4) of the section member to be coated is stretched, the stretched section member (3) is then delivered without loss of tension to a device (7, 8) for holding the section member (3) on the sides (10, 11) which are not to be coated, and the exposed side (4) of the section member to be coated is then coated with adhesive (13) and the tension on the section member (3) is then reduced.

2. A method according to claim 1, characterised in that the tension on the section member (3) through stretching is approximately equal to the tension in the section member when finally mounted.

3. Means for applying adhesive (13) to flexible parts (3) in the form of continuous strips, more particularly seals for openings in motor vehicle bodies, comprising a section member (3) having similar or different cross-sections, one of which is provided with an adhesive or adhesive strip (13), characterised in that a movable clamping device (1) is provided, on which the section member (3) is placed so that the side (4) to be coated is under tension, and a receiving device (2) is provided and secures the tensioned section member (3) on the sides (10, 11) which are not to be coated, and a means for applying adhesive or adhesive medium is provided and cooperates with the side (4) with the section member to be coated.

4. Means according to claim 3, characterised in that the clamping device (1) has a clamping surface having a length approximately equal to the length to be secured of the component bearing the section member (3).

5. Means according to claim 3 or 4, characterised in that the clamping device (1) comprises individually radially movable segments which are vertically adjustable relative to one another.

6. Means according to any of the preceding claims, characterised in that the receiving device (2) comprises two jaws (7, 8), at least one of which is movably mounted.

7. Means according to claim 6, characterised in that the jaws (7, 8) when closed bound a surface corresponding to the negative shape of the section member (1) on the sides (10, 11) which are not to be coated.

8. Means according to claim 6 or 7, characterised in that the receiving device (2) is annular.

9. Means according to any of the preceding claims, characterised in that the receiving device (2) is rotatably mounted.

10. Means according to any of the preceding claims, characterised in that a source of negative pressure is connectable to the receiving device (2) and a suction opening in the surface for receiving the suction member (1).

11. Means according to any of the preceding claims, in which the adhesive medium is a strip coated on both sides, characterised in that the adhesive strip is disposed on a supply roll (13) disposed inside the space described by the receiving device (2), which is annular.

12. Means according to claim 11, characterised in that the adhesive strip is supplied from the supply roll (13) via guide rollers (14) and pressure rollers (15) to the side (4) of the section member which is to be coated.

## Revendications

1. Procédé pour appliquer un adhésif sur des profilés élastiques (3), en particulier sur des profilés continus destinés à isoler des ouvertures de carrosserie de véhicules automobiles, caractérisé en ce que, le côté du profilé (4) à enduire est étiré, en ce que ensuite le profilé (3) ainsi étiré est livré sans perte de tension à un appareillage (7, 8) maintenant le profilé (3) sur son côté (10, 11) qui n'est pas à enduire et en ce que le côté du profilé (4) à enduire, ainsi libéré est enduit d'adhésif et qu'ensuite la tension du profilé (3) est annulée.

2. Procédé selon la revendication 1, caractérisé en ce que la tension dans le profilé (3) par suite de l'étirement correspond approximativement à la tension dans le profilé terminé et monté.

3. Dispositif pour appliquer un adhésif (13) sur un profilé élastique (3), en particulier pour des garnitures d'étanchéité pour ouverture de carrosserie de véhicules à moteur, se composant d'un profilé (3) avec des côtés profilés semblables ou non dont un est à pouvoir d'adhésif ou de bande adhésive, caractérisé en ce que, il est prévu un dispositif de tension (1) mobile, sur lequel est appliqué sous contrainte le profilé (3) par son côté (4) à enduire, en ce que un dispositif de réception (2) est prévu, qui immobilise le profilé (3) tendu par ses côtés (10, 11) à ne pas enduire et en ce qu'il est prévu un dispositif pour appliquer un adhésif ou colle qui agit sur le côté du profilé (4) à enduire.

4. Dispositif selon la revendication 3, caractérisé en ce que, le dispositif de tension (1) comprend une surface de serrage, dont la longueur correspond approximativement à la longueur de fixation de l'élément de construction portant le profilé (3).

5. Dispositif selon l'une des revendications 3 ou 4, caractérisé en ce que, le dispositif de tension (1) se compose de segments individuels déplaçables radialement, qui sont aménagés réglables en hauteur l'une envers l'autre.

6. Dispositif selon une des revendications précédentes, caractérisé en ce que, le dispositif de réception (2) se compose de deux joues (7, 8), dont une au moins peut se déplacer.

7. Dispositif selon la revendication 6, caractérisé en ce que, les joues (7, 8) en condition de fermeture délimitent une surface, qui correspond au négatif du profilé (1) pour ses côtés à ne pas enduire (10, 11).

8. Dispositif selon l'une des revendications 6 ou 7, caractérisé en ce que, le dispositif de réception (2) est réalisé en forme d'anneau.

9. Dispositif selon une des revendications précédentes, caractérisé en ce que, le dispositif de réception (2) est placé mobile autour d'un axe.

10. Dispositif selon une des revendications précédentes, caractérisé en ce que, au dispositif de réception (2) est connectée une source de dépression, dont l'ouverture d'aspiration débouche sur la surface de réception pour le profilé (3).

11. Dispositif selon une des revendications précédentes, pour lequel est prévu comme moyen de collage, un ruban adhésif enduit des deux côtés, caractérisé en ce que, le ruban adhésif est placé sur un rouleau provisionnel (13) se trouvant à l'intérieur de l'espace délimité par le dispositif de réception (2) réalisé en forme d'anneau.

12. Dispositif selon la revendication 11, caractérisé en ce que, le ruban adhésif est amené du rouleau provisionnel (13) sur le côté du profilé (4) à enduire par des rouleaux de guidage (14) et des rouleaux presseurs (15).

Fig. 1

Fig. 2

Fig. 3

Fig. 4